# EUROPÄISCHE PATENTSCHRIFT

(11) **EP 0 516 147 B1**
(45) Veröffentlichungstag und Bekanntmachung des Hinweises auf die Patenterteilung: **26.07.1995**
(21) Anmeldenummer: 92109094.0
(22) Anmeldetag: 29.05.1992
(51) Int. Cl.: B30B 15/00, B30B 15/28, B30B 1/14

(54) **Vorrichtung zum Messen und Kontrollieren der Presskraft auf das Werkstück in einer Verpackungsmaschine**
Device for measuring and controlling the pressing force applied to the workpiece in a packaging machine
Dispositif pour la mesure et la régulation de la force de pressage sur un objet dans une machine

(30) Priorität: 29.05.1991 DE 4117542
(43) Veröffentlichungstag der Anmeldung: 02.12.1992
(73) Patentinhaber: Klöckner Hänsel GmbH, 30024 Hannover (DE)
(72) Erfinder: Horst-Egon Kaplan, 4811 Oerlinghausen (DE)
(74) Vertreter: Rehberg, Elmar, Dipl.-Ing.

(56) Entgegenhaltungen:
- EP-A- 0 304 623
- CH-A- 372 553
- DE-B- 1 032 941
- DE-C- 839 896
- US-A- 3 283 610
- US-A- 4 419 558
- US-A- 4 575 972

## Beschreibung

Die Erfindung bezieht sich auf eine Arbeitsstation an einer Verpackungsmaschine, insbesondere Thermoformstation, mit einem ein Oberteil und ein Unterteil aufweisenden Werkzeug, das eine gehäuseseitig abgestützte gefesselte Federanordnung aufweist, deren Vorspannkraft und Einfederweg einstellbar ausgebildet sind und dessen zumindest einer Teil hubartig angetrieben ist, über welchen auf ein Werkstück in der Bearbeitungsstellung über die zusammengedrückte Federanordnung eine gegenüber der eingestellten Vorspannkraft vergleichsweise größere Preßkraft ausgeübt wird. Unter einer solchen Arbeitsstation wird insbesondere eine Verform- oder Siegelungsstation zum Herstellen oder Verschließen von in einer thermoplastischen Kunststoffolie tiefgezogenen Verpackungsbehältern verstanden. Das Werkzeug weist zwei Teile auf, die bei entsprechender Anordnung als Ober- und Unterteil bezeichnet werden können und von denen der eine Teil hubartig angetrieben wird, während der andere Teil entweder stillstehend angeordnet ist oder ebenfalls angetrieben wird oder jedenfalls ausweichbar gelagert ist. In einer Versiegelungsstation wird eine Deckelfolie auf die tiefgezogene Folienbahn unter Einwirkung einer Preßkraft aufgesiegelt. Die beiden Folienbahnen, die taktweise durch die gesamte Verpackungsmaschine bewegt werden und dabei auch an anderen Arbeitsstation bearbeitet werden, stellen das Werkstück dar.

Eine Arbeitsstation der eingangs beschriebenen Art ist bekannt. Sie ist als Versiegelungsstation an einer Thermoformmaschine ausgebildet. Das Werkzeug wird von einem Ober- und einem Unterteil gebildet, wobei der Unterteil über einen Kniehebeltrieb hubartig angetrieben ist und in der Bearbeitungsstellung, die die Schließstellung des Werkzeugs darstellt, auf das Werkstück, nämlich die beiden Folienbahnen, einwirkt. Dabei ist es wichtig, daß das Werkstück unter Preßkraft bearbeitet wird. Um reproduzierbar eine solche Preßkraft aufzubringen, sind Federanordnungen bekannt, die aus einer oder mehreren Federn bestehen. Diese Federanordnungen sind im Weg eines der beiden Teile des Werkzeugs vorgesehen und dienen dem Zweck, die Preßkraft nicht über den Kniehebeltrieb in direkter rahmenmäßiger Abstützung auf das Werkstück aufzubringen, sondern in der Schließstellung des Werkzeugs, die die Bearbeitungsstellung sein möge, die Kraft der Federanordnung auf das Werkstück einwirken zu lassen. Zu diesem Zweck wird die Federanordnung in der Bearbeitungsstellung etwas zusammengedrückt. Die Federanordnung ist gefesselt vorgesehen. Es ist bekannt, sowohl eine Vorspannkraft als auch den Einfederweg einstellbar zu gestalten. Unter der Vorspannkraft wird die Kraft verstanden, mit der die Federanordnung in der Offenstellung des Werkzeugs vorgespannt ist. Unter dem Einfederweg wird der Weg verstanden, um den das Federpaket in der Bearbeitungsstellung zusammengedrückt wurde. Es versteht sich, daß die von der Federanordnung auf das Werkstück ausgeübte Preßkraft entsprechend der Zusammendrückung bzw. dem Einfederweg der Federanordnung größer als die eingestellte Vorspannkraft in der Offenstellung des Werkstücks ist. Die Einstellung der Vorspannkraft und des Einfederwegs erfolgt über Maßvorgaben des Herstellers der Arbeitsstation. Da die das Werkstück bildenden Kunststoffolien je nach Anwendungsfall unterschiedliche Eigenschaften aufweisen, also insbesondere in der Dicke differieren oder sich auch die Toleranzbereiche der Dicke verschieben, ist es erforderlich, für eine ordnungsgemäße Arbeitsweise der Arbeitsstation die Preßkraft nachzustellen bzw. einzustellen, beispielsweise damit in einer Siegelstation die Deckfolie auf die Becherfolie so aufgesiegelt wird, daß Langzeitdichtheit erreicht wird. Dementsprechend wird die Vorspannkraft in ihrer Einstellung verändert bzw. angepaßt, was von der Geschicklichkeit der Bedienungsperson abhängig ist. Änderungen der Vorspannkraft infolge Alterung, Bruch, Setzen der Federanordnung usw. können das Arbeitsergebnis nachteilig beeinflussen und bleiben über längere Produktionszyklen oft unbemerkt. Es kann auch vorkommen, daß sich eine Deckelfolie erst nach mehreren Tagen oder sogar Wochen löst, so daß entsprechende Kontrollen unmittelbar nach dem Versiegeln den Fehler infolge abweichender Preßkraft nicht erkennen lassen. Die Mengen, die auf diese Art und Weise als Ausschluß produziert werden können, können beträchtlich sein.

Aus der DE-AS 26 56 219 ist ebenfalls eine Arbeitsstation an einer Verpackungsmaschine bekannt, die in ihrer grundsätzlichen Anordnung vergleichbar aufgebaut ist. Die Federanordnung wird von einer einzelnen Tellerfeder gebildet, die weder in ihrer Vorspannkraft noch hinsichtlich des Einfederwegs einstellbar ist. Eine Anpassung an die erforderlichen Arbeitsbedingungen ist auf diesem Weg nicht möglich. Die Arbeitsstation weist allerdings vorteilhaft bereits eine Überlastsicherung auf, deren wesentliche Elemente aus zwei Zahnrädern bestehen, die gegeneinander verdrehbar sind, so daß sich die Zähne in der einen Stellung aufeinander abstützen, in der anderen Stellung jedoch, bei der die Zahnräder um eine halbe Teilung gegeneinander verdreht sind, gleichsam eine Kraftabstützung vermieden wird.

Aus der US-A-4 419 558 ist ein Verfahren und eine Vorrichtung zum Anzeigen und Steuern an einer Widerstands-Schweißmaschine bekannt. Das dabei eingesetzte Werkzeug weist ein feststehendes Unterteil und ein hubartig angetriebenes Oberteil auf. Dem hubartig angetriebenen Oberteil ist in der Bearbeitungsstellung ein ortsfester Anschlag zugeordnet, auf dem er sich in der Bearbeitungsstellung abstützt. Mit dem hubartig angetriebenen Oberteil ist eine Federanordnung und eine Vorrichtung zum Messen einer Kraft in Reihe geschaltet, so daß in der Bearbeitungsstellung der Abfall der Kraft der Federanordnung bei ihrer Entspannung bei gleichzeitigem Eindringen des Schweißwerkzeuges in das Werkstück gemessen und zu Steuerzwecken weiterverarbeitet werden kann.

Der Erfindung liegt die Aufgabe zugrunde, eine Arbeitsstation der eingangs beschriebenen Art so auszustatten, daß die Vorspannkraft und damit auch die Preßkraft, die in der Bearbeitungsstellung auf das Werkstück einwirkt, besser und genauer einstellbar ist und reproduzierbar aufrechterhalten werden kann.

Erfindungsgemäß wird dies bei der Arbeitsstation der eingangs beschriebenen Art dadurch erreicht, daß eine Vorrichtung zum Messen der Vorspannkraft der Federanordnung und der vergleichsweise größeren Preßkraft auf das Werkstück in der Bearbeitungsstellung in Reihe vorgesehen, gehäuseseitig abgestützt und im Bereich des Ober- und/oder Unterteils des Werkzeugs so angeordnet ist, daß die Vorrichtung der in der Offenstellung des Werkzeuges von der Vorspannkraft und in der Bearbeitungsstellung von der Preßkraft belastet ist.

In der Regel handelt es sich bei der Bearbeitungsstellung um die Schließstellung der beiden Teile des Werkzeugs. In dieser Stellung wirken die Teile des Werkzeugs auf das Werkstück ein und in dem Kraftweg ist die Vorrichtung zum Messen der Preßkraft auf das Werkzeug eingeschaltet. Damit wird es zum ersten Mal möglich, die Preßkräfte zu messen und zu überwachen. Dies kann sporadisch, z. B. beim Einstellen der Arbeitsstation, aber auch kontinuierlich bei jedem Arbeitstakt erfolgen, so daß beispielsweise durch eine Aufzeichnung der Preßkraft nachweisbar ist, daß beispielsweise eine ordnungsgemäße Versiegelung jedes der in der betreffenden Charge hergestellten Werkstücks eingehalten ist. Dies ist bedeutungsvoll für die Verpackung von Arzneimitteln, beispielsweise Ampullen, in eine gedeckelte Beckerfolie. Mit dieser neuen Vorrichtung wird es möglich, die Preßkraft gezielt einzustellen, und zwar auf vorgegebene, erforderliche oder auch durch Erfahrung gewonnene Werte. Auch ist jederzeit eine Nachjustierung möglich, deren Notwendigkeit die verschiedensten Ursachen haben kann. Beispielsweise kann die Art und die Dicke der zu verarbeitenden Folie schwanken. Auch eine Abhängigkeit der Preßkraft von der Formatgröße ist gegeben usw. Die neue Vorrichtung gestattet es weiterhin, die Preßkraft in der Produktion kontinuierlich zu überwachen. Federbrüche in der Federanordnung werden sofort bemerkt und können zur Anzeige gebracht werden oder einen Stillstand der Verpackungsmaschine auslösen, so daß die Produktion von Ausschuß vermieden wird. Auch andere Arten der Folgeschaltungen sind möglich. Der wichtigste Vorteil besteht in der kontinuierlichen Überwachung der ordnungsgemäßen Funktion der Federanordnung und die EInhaltung der Preßkraft in einem bestimmten Toleranzbereich. Abweichungen von diesem Toleranzbereich, z. B. wenn sich eine Tablette zwischen Ober- und Unterteil als Hindernis bemerkbar macht, können sofort zum Stillsetzen der Verpackungsmaschine und zur Verhinderung von Zerstörungen genutzt werden. Je nach der Anordnungsstelle der Vorrichtung zum Messen der Preßkraft kann auch die Einstellung der Federanordnung hinsichtlich ihrer Vorspannkraft, also außerhalb der Bearbeitungsstellung, gemessen werden, so daß die Vorspannung der Federanordnung unter Berücksichtigung des Einfederwegs gezielt auf einen gewünschten Wert einstellbar ist. Zur Erreichung dieses Zwecks ist die Vorrichtung zum Messen der Preßkraft an dem Teil des Werkzeugs angeordnet, an dem auch das Federpaket gelagert ist. Die Vorrichtung ist in Reihe zu dem Federpaket bzw. der Federanordnung vorgesehen. Bei Reihenanordnung ist die Vorrichtung zum Messen der Preßkraft mit ihrem einen Auflager auf der Federanordnung abgestützt.

Die Vorrichtung zum Messen der Preßkraft und die Federanordnung können in Reihe im Antriebsstrang oder abstützseitig an dem Oberteil oder Unterteil des Werkzeugs angeordnet sein. Damit ist die Federvorspannung außerhalb der Bearbeitungsstellung meßbar, also in einer Offenstellung des Werkzeugs, in welcher vorzugsweise die Einstellung vorgenommen wird.

Die Federanordnung kann aus einer einzelnen Feder bestehen. Zweckmäßig jedoch ist die Federanordnung aus einer Reihe von Tellerfedern zusammengesetzt, die auf der einen Seite an der Vorrichtung zum Messen der Preßkraft und auf der anderen Seite an einer Buchse abgestützt sind, wobei die Buchse zur Einstellung des Einfederwegs in einem Gewinde gehäuseseitig gelagert ist. Durch die Festlegung und Einstellung des Einfederwegs ergibt sich die Zusammendrückung der Federanordnung in der Bearbeitungsstellung und damit die Preßkraft, die auf das Werkstück übertragen wird.

Mit dem Unterteil des Werkzeugs kann eine Stange verbunden sein, die durch die Buchse hindurchgeführt ist und zur Einstellung der Vorspannkraft der Tellerfedern über eine Schraubeinrichtung an der Buchse abgestützt ist. Dies stellt eine einfache konstruktive Ausführungsmöglichkeit dar.

Die Vorrichtung zum Messen der Preßkraft kann als Wägezelle, Kraftaufnehmer o. dgl. ausgebildet sein. Auch weitere Möglichkeiten eröffnen sich dem Fachmann.

Der Vorrichtung zum Messen der Preßkraft kann eine Steuereinrichtung zugeordnet sein, die mit dem Antrieb der Arbeitsstation oder der gesamten Verpackungsmaschine verbunden sein kann, um beispielsweise die Verpackungsmaschine bei Abweichungen der Preßkraft von der Einstellung stillzusetzen. Auch eine Warneinrichtung in Form einer Hupe oder eines Lichtzeichens kann vorgesehen sein, um längere Stillstandszeiten zu vermeiden.

Es ist weiterhin möglich, daß der Vorrichtung zum Messen der Preßkraft eine Überlastsicherung zum Schutz der Federanordnung zugeordnet ist. Diese Überlastsicherung kann in Abhängigkeit von dem zeitlichen Verlauf der Preßkraft gesteuert sein. Tritt innerhalb eines Arbeitszyklusses zu einem Zeitpunkt, an dem an sich keine Preßkraft auftreten dürfte, eine solche auf, ist dies ein Maß dafür, daß sich ein Hindernis zwischen den beiden Teilen des Werkzeugs befindet, so daß es erforderlich ist, die Überlastsicherung entsprechend zu betätigen. Die Überlastsicherung kann eine ausklinkbare Kupplung aufweisen, die von der Vorrichtung zum Messen der Preßkraft gesteuert ist. Damit kann zwar noch ein Hub ausgeführt werden. Es erfolgt jedoch keine ordnungsgemäße Bearbeitung des Werkstücks und es bleibt genügend Zeit, um beispielsweise auch eine schnellaufende Verpackungsmaschine stillzusetzen.

Die erfindungsgemäße Arbeitsstation wird anhand bevorzugter Ausführungsbeispiele weiter erläutert und beschrieben. Es zeigen:
- Figur 1: einen Vertikalschnitt durch eine als Siegelstation ausgebildete Arbeitsstation mit den für die Erfindung wesentlichen Teilen,

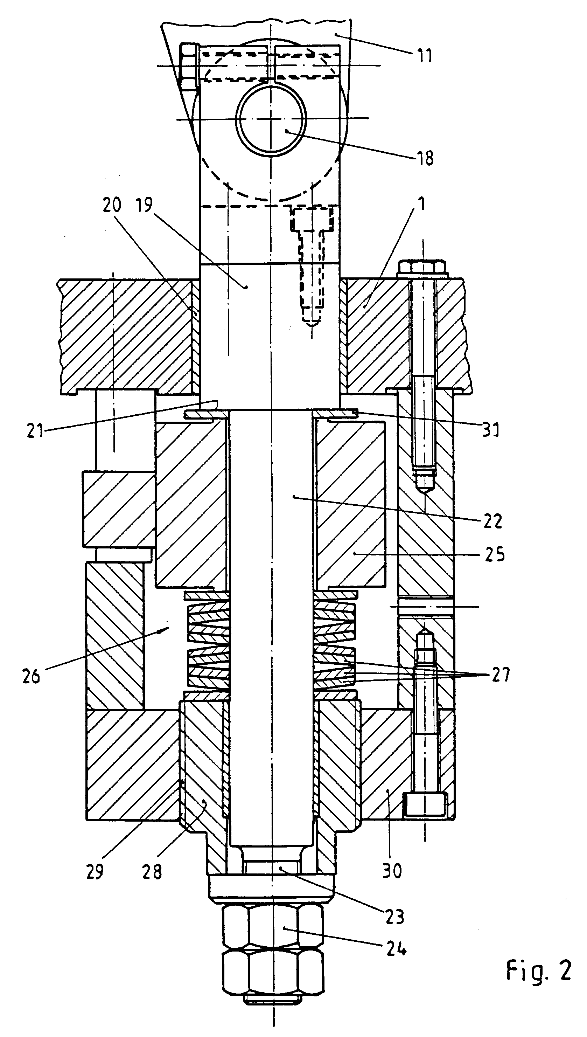

- Figur 2: eine vergrößerte Darstellung der Arbeitsstation gemäß Figur 1 zur Verdeutlichtung der Vorrichtung zum Messen der Preßkraft und
- Figur 3: eine Schnittdarstellung wesentlicher Teile der Arbeitsstation mit der zusätzlichen Anordnung einer Überlastsicherung.

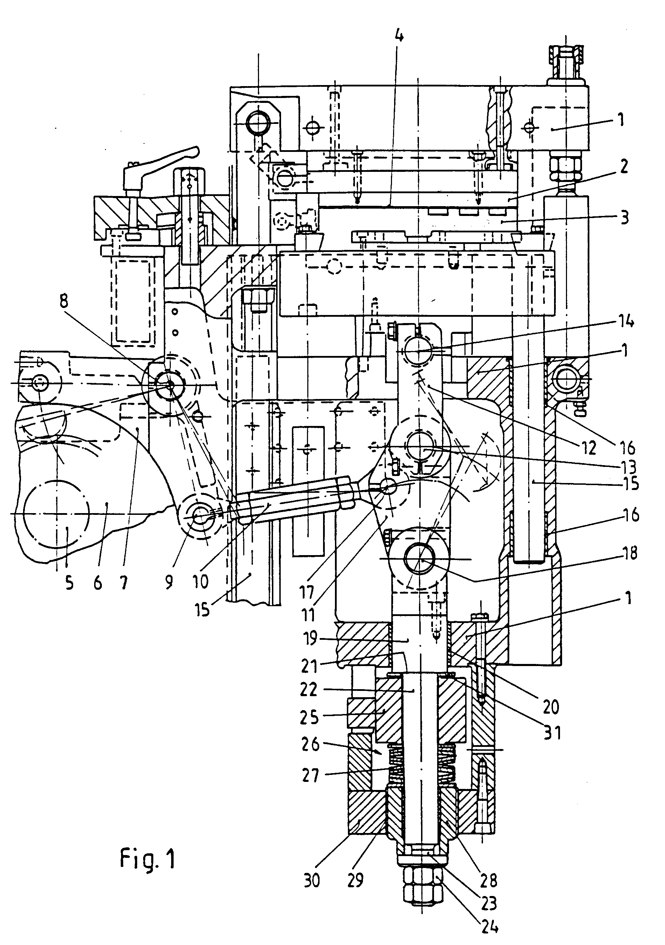

Die in Figur 1 im Schnitt dargestellte Arbeitsstation weist einen mehrteiligen Rahmen 1 auf, an dem ein Oberteil 2 und ein Unterteil 3 eines Werkzeugs 2, 3 angeordnet sind. Das Oberteil 2 ist am Rahmen 1 ortsfest gelagert, während das Unterteil 3 in Vertikalrichtung beweglich gegenüber dem Rahmen 1 gelagert ist. Zwischen Oberteil 2 und Unterteil 3 wird taktweise das zu bearbeitende Werkstück 4 bewegt und stillgesetzt, wobei im Stillstand in der Bearbeitungsstellung die Bearbeitung erfolgt, indem beispielsweise eine Deckelfolie auf eine Becherfolie, die zusammen das Werkstück 4 bilden, aufgesiegelt wird. Das Werkzeug 2, 3 kann direkt das Oberteil 2 und das Unterteil 3 aufweisen. Es ist auch möglich, Werkzeugeinsätze zu verwenden, die austauschbar angeordnet sind. Zum hin- und hergehenden Antrieb des Unterteils 3 relativ zum Oberteil 2 ist ein Antrieb vorgesehen, wobei dieser Antrieb häufig von dem Gesamtantrieb der Verpackungsmaschine abgenommen wird. Eine solche Antriebswelle 5, die über die gesamte Verpackungsmaschine durchgeht, ist schematisch angedeutet. Auf dieser Antriebswelle 5 sitzt eine Nockenscheibe 6, die beispielsweise auf ihrem Umfang eine Kurvenbahn trägt, mit der ein Schwinghebel 7 zusammenarbeitet, der hin- und herschwenkbar am Rahmen 1 vermittels eines Gelenks 8 gelagert ist. Am anderen Ende des Schwinghebels 7 greift über ein gegenüber dem Rahmen bewegliches Gelenk 9 eine Stößelstange 10 an, die zu Einstellzwecken längenveränderlich ausgebildet ist. Die Stößelstange 10 führt zu einem Kniehebeltrieb, der Hebel 11 und 12 aufweist, die durch ein Kniegelenk 13 miteinander verbunden sind. Die Totpunktslage ist in durchgezogener Linienführung dargestellt, während die Öffnungsstellung des Kniehebeltriebs in gestrichelter Weise angedeutet ist. Der Hebel 12 des Kniehebeltriebs greift über ein Gelenk 14 letztlich am Unterteil 3 des Werkzeugs 2, 3 an. Zur Führung des Unterteils 3 am Rahmen 1 sind Führungsstangen 15 mit dem Unterteil 3 verbunden, die in Gleitlagern 16 am Rahmen 1 geführt sind. Die Stößelstange 10 greift mittels eines Gelenks 17 an dem Hebel 11 an. Der Hebel 11 ist über ein Gelenk 18 an einem Druckstück 19 gelagert, welches in vertikaler Richtung über Gleitlager 20 am Rahmen 1 geführt ist. Das Druckstück 19 setzt sich über einen Absatz 21 in einer Stange 22 fort und endet in einem Gewindeschaft 23, auf dem mindestens eine Stellmutter 24 angeordnet ist. Die Stange 22 greift dabei durch eine Vorrichtung 25 zum Messen der Preßkraft auf das Werkstück 4 hindurch. Die Vorrichtung 25 kann aus einer Wägezelle, einem Kraftaufnehmer, einem piezoelektrischen Element o. dgl. bestehen. Die Vorrichtung 25 stützt sich einerseits an dem Absatz 21 des Druckstücks 19 ab. Sie ist auf der anderen Seite auf einer Federanordnung 26 abgestützt, die hier als ein Paket Tellerfedern 27 ausgebildet ist. Grundsätzlich genügt auch eine einzige Feder für die Ausbildung der Federanordnung 26. Die Federanordnung 26 ist wiederum auf einer Buchse 28 abgestützt, die über ein Gewinde 29 an einem Joch 30 verstellbar ist, wobei das Joch 30 mit dem Rahmen 1 verbunden ist. Die Stellmutter 24 stützt sich an der Buchse 28 ab, so daß damit die Vorrichtung 25 und die Federanordnung 26 gefesselt in Reihe angeordnet sind. Eine Verdrehung der Stellmutter 24 relativ zum Gewindeschaft 23 führt zu einer Änderung bzw. Einstellung der Vorspannkraft der Federanordnung 26. Eine Verdrehung der Buchse 28 im Gewinde 29 führt zu einer Einstellung bzw. Veränderung des Einfederwegs der Federanordnung 26 in der Bearbeitungsstellung. Als Einstellung beider Größen relativ zueinander ergibt sich die Einstellbarkeit der Restkraft der Teile des Werkzeugs 2, 3 auf das Werkstück 4 in der Bearbeitungsstellung.

Da die Vorrichtung 25 im Bereich des Federpakets 26 angeordnet ist, wobei auch eine Parallelanordnung möglich wäre, ist der zusätzliche Vorteil gegeben, daß auch in der Offenstellung des Kniehebeltriebs bzw. der Teile 2 und 3 des Werkzeugs 2, 3 die Vorspannung der Federanordnung 26 mit Hilfe der Vorrichtung 25 meßbar ist. Es kann also auch bereits die Vorspannung gezielt auf einen bestimmten Wert eingestellt werden. Der Kniehebeltrieb dient nur zum Aufbringen der Bewegung, nicht etwa zum Erzeugen der Preßkraft. In der Bearbeitungsstellung, also wenn das Werkstück 4 zwischen dem Oberteil 2 und dem Unterteil 3 eingeklemmt ist und die Preßkraft übertragen wird, hat die Vorrichtung 25 oder eine am Absatz 21 dazwischengefügte Unterlegscheibe 31 vom Rahmen 1 abgehoben, so daß die Preßkraft entsprechend der Zusammendrückung des Federpakets 26 auf das Werkstück 4 übertragen wird. Da diese Preßkraft über die Vorrichtung 25 geleitet wird, wird sie dort gemessen und können Folgeschaltungen vollzogen werden. Beispielsweise ist es möglich, einen Preßkraftbereich einzustellen und bei Verlassen dieses Bereichs ein Signal auszulösen, mit dem beispielsweise der Kniehebeltrieb oder auch der Antrieb der ganzen Verpackungsmaschine stillgesetzt wird. Es ist auch möglich, die Preßkräfte bei jedem Arbeitsspiel zu messen und aufzuzeichnen, um dokumentarisch festzuhalten, daß die Siegelung unter Einwirkung einer definierten Preßkraft erfolgt ist. Weitere Möglichkeiten sind denkbar.

In der Offenstellung des Kniehebeltriebs, wenn also Oberteil 2 und Unterteil 3 so voneinander entfernt sind, daß das Werkstück 4 nicht eingeklemmt ist, gelangt die Unterlegscheibe 31 bzw. damit auch die Vorrichtung 25 im Bereich des Druckstücks 19 am Rahmen 1 zur Anlage, so daß sich die Vorspannkraft der Federanordnung 26 am Rahmen 1 abstützt. Der Kniehebeltrieb ist kraftfrei.

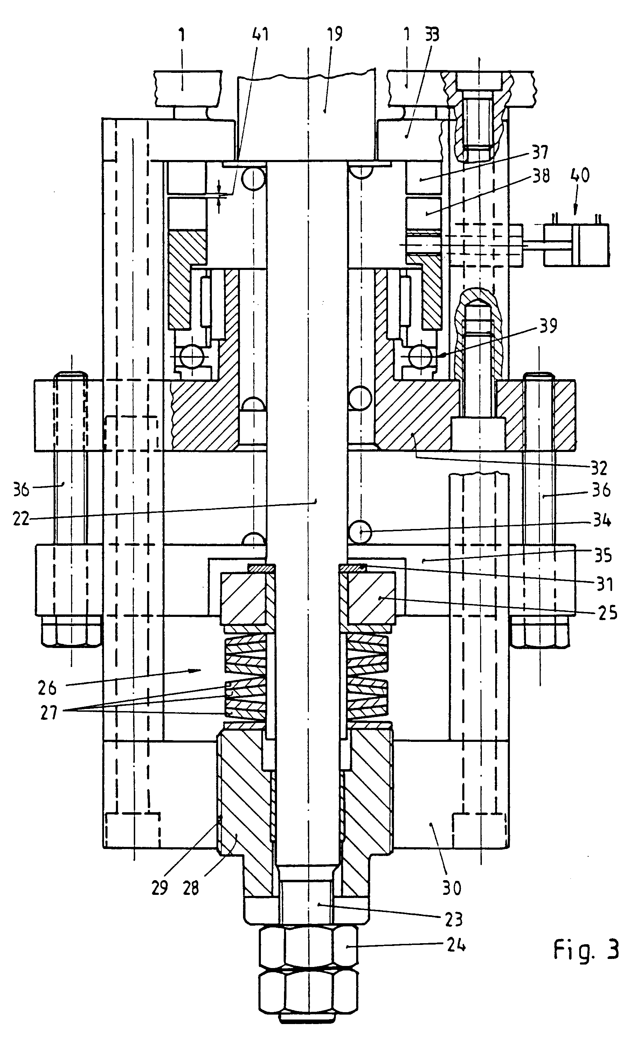

Figur 3 zeigt nochmals die für die Erfindung wesentliche Stelle der Arbeitsstation, jedoch unter Hinzufügung einer Überlastsicherung. Das Joch 30 ist hier nicht mit dem Rahmen 1 verbunden, sondern es ist ein Joch 32, welches mit dem Rahmen fest verbunden, beispielsweise verschraubt ist. Das Joch 30 dagegen ist über eine Verschraubung mit einer Platte 33 verbunden, die in der Offenstellung des Werkzeugs 2, 3 am Rahmen 1 anliegt. Die Anlage geschieht über eine Sicherungsfeder 34, die sich an ihrem anderen Ende auf einer Lagerplatte 35 abstützt. Die Lagerplatte 35 ist über Schrauben 36 mit dem Joch 32 verbunden. Über die Schrauben 36 kann damit die Vorspannung der Sicherungsfeder 34 eingestellt werden. Die Sicherungsfeder 34 ist erheblich schwächer dimensioniert als die Federanordnung 26 der Tellerfedern 27. So kann die Kraft der Sicherungsfeder beispielsweise in der Größenordnung von 200 bis 400 kp, die der Tellerfeder 27 in der Größenordnung von 5.000 kp liegen. Das Druckstück 19 besitzt auch hier die Stange 22, die entsprechend abgesetzt ausgebildet ist und hier die Sicherungsfeder 34, die Vorrichtung 25 und die Federanordnung 26 durchsetzt. Auch die Buchse 28 ist in analoger Weise vorgesehen und über das Gewinde 29 zur Einstellung des Einfederwegs ausgebildet.

Die Sicherungsfeder 34 gehört zur Überlastsicherung. Weitere Teile der Überlastsicherung sind ein Zahnkranz 37, der mit der Platte 33 verbunden ist und ein Zahnkranz 38, der über ein Axiallager 39 mindestens um eine halbe Zahnteilung drehbar auf dem Joch 32 gelagert ist. Es ist ein Antrieb 40, z. B. eines Pneumatikzylinders, für den Antrieb des Zahnkranzes 38 um eine halbe Zahnteilung gegenüber dem Zahnkranz 37 vorgesehen. Normalerweise stehen sich die beiden Zahnkränze 37 und 38 so gegenüber, daß sich die Spitzen der Zähne in axialer Richtung gegenüberstehen. Damit ist nur ein relativ kleiner Totweg 41 vorgesehen, der bei Bewegung des Kniehebeltriebs zunächst zurückgelegt wird. Der Zahnkranz 37 setzt auf dem Zahnkranz 38 auf, so daß damit die Platte 33 und das mit ihr verbundene Joch 30 ortsfest am Rahmen 1 abgestützt ist. Die Sicherungsfeder 34 wird geringfügig zusammengedrückt. Jede weitere Bewegung der Teile 2 und 3 des Werkzeugs aufeinander zu führt dann zu einer Zusammendrückung der Federanordnung 26, so daß das Werkstück mit der eingestellten Preßkraft belastet wird, die wiederum über die Vorrichtung 25 meßbar ist. Wird die vorgesehene Preßkraft überschritten, was die Vorrichtung 25 anzeigt, dann befindet sich ein Hindernis zwischen den Teilen 2 und 3 des Werkzeugs. Diese erhöhte Preßkraft kann dazu benutzt werden, um den Antrieb 40 zu betätigen und damit die Überlastsicherung auszulösen. Der Zahnkranz 38 wird um eine halbe Teilung verdreht, so daß sich die Zähne des einen Zahnkranzes gegenüber den Lücken des anderen Zahnkranzes befinden. Eine weitere Abwärtsbewegung des Druckstücks 19 und der Stange 22 führt dann dazu, daß die Einheit aus Platte 33 und Joch 30 nach unten mitgenommen wird, wobei dabei auch die Buchse 28 ausweichen kann und sich somit in der Federanordnung 26 die normalerweise ausgeübte Preßkraft nicht aufbaut. Das Werkzeug 2, 3 wird hierdurch geschützt. Auch in diesem Fall kann ein Signal abgeleitet und beispielsweise dazu benutzt werden, um die Station stillzusetzen oder das Hindernis zu beseitigen. Die Überlastsicherung kann vorzugsweise so betrieben werden, daß sie nur im Gefahrenfall anspricht, so daß der Antrieb 40 normalerweise nicht in Gang gesetzt wird. Es ist aber auch möglich, bei jedem Arbeitszyklus die Relativverdrehung der Zahnkränze 37 und 38 gegeneinander durchzuführen, so daß die kraftmäßige Abstützung dann hier erfolgen kann, während nur im Hindernisfall diese Verdrehung nicht durchgeführt oder wieder rückgängig gemacht wird.

### Bezugszeichenliste:

- 1: = Rahmen
- 2: = Oberteil
- 3: = Unterteil
- 4: = Werkstück
- 5: = Antriebswelle
- 6: = Nockenscheibe
- 7: = Schwinghebel
- 8: = Gelenk
- 9: = Gelenk
- 10: = Stößelstange
- 11: = Hebel
- 12: = Hebel
- 13: = Kniegelenk
- 14: = Gelenk
- 15: = Führungsstange
- 16: = Gleitlager
- 17: = Gelenk
- 18: = Gelenk
- 19: = Druckstück
- 20: = Gleitlager
- 21: = Absatz
- 22: = Stange
- 23: = Gewindeschaft
- 24: = Stellmutter
- 25: = Vorrichtung
- 26: = Federanordnung
- 27: = Tellerfeder
- 28: = Buchse
- 29: = Gewinde
- 30: = Joch
- 31: = Unterlegscheibe
- 32: = Joch
- 33: = Platte
- 34: = Sicherungsfeder
- 35: = Lagerplatte
- 36: = Schraube
- 37: = Zahnkranz
- 38: = Zahnkranz
- 39: = Axiallager
- 40: = Antrieb
- 41: = Totweg

## Patentansprüche

1. Arbeitsstation an einer Verpackungsmaschine, insbesondere Thermoformstation, mit einem ein Oberteil (2) und ein Unterteil (3) aufweisenden Werkzeug, das eine gehäuseseitig abgestützte gefesselte Federanordnung (26) aufweist, deren Vorspannkraft und Einfederweg einstellbar ausgebildet sind und dessen zumindest einer Teil (2 oder 3) hubartig angetrieben ist, über welchen auf ein Werkstück (4) in der Bearbeitungsstellung über die zusammengedrückte Federanordnung (26) eine gegenüber der eingestellten Vorspannkraft vergleichsweise größere Preßkraft aufgeübt wird, dadurch gekennzeichnet, daß eine Vorrichtung (25) zum Messen der Vorspannkraft der Federanordnung (26) und der vergleichsweise größeren Preßkraft auf das Werkstück (4) in der Bearbeitungsstellung in Reihe vorgesehen, gehäuseseitig abgestützt und im Bereich des Ober- und/oder Unterteils (2, 3) des Werkzeuges so angeordnet ist, daß die Vorrichtung (25) in der Offenstellung des Werkzeuges (4) von der Vorspannkraft und in der Bearbeitungsstellung von der Preßkraft belastet ist.

2. Arbeitsstation nach Anspruch 1, dadurch gekennzeichnet, daß die Vorrichtung (25) zum Messen der Preßkraft mit ihrem einen Auflager auf der Federanordnung (26) abgestützt ist.

3. Arbeitsstation nach Anspruch 2, dadurch gekennzeichnet, daß die Vorrichtung (25) zum Messen der Preßkraft und die Federanordnung (26) in Reihe im Antriebsstrang oder abstützseitig an dem Unterteil (3) oder dem Oberteil (2) des Werkzeugs angeordnet sind.

4. Arbeitsstation nach Anspruch 2 und 3, dadurch gekennzeichnet, daß die Federanordnung (26) aus einer Reihe von Tellerfedern (27) zusammengesetzt ist, die auf der einen Seite an der Vorrichtung (25) zum Messen der Preßkraft und auf der anderen Seite an einer Buchse (28) abgestützt sind, wobei die Buchse (28) zur Einstellung des Einfederwegs in einem Gewinde (29) gehäuseseitig gelagert ist.

5. Arbeitsstation nach Anspruch 4, daß mit dem Unterteil (3) des Werkzeugs (2, 3) eine Stange (22) verbunden ist, die durch die Buchse (28) hindurchgeführt ist und zur Einstellung der Vorspannkraft der Tellerfedern (27) über eine Schraubeinrichtung (23, 24) an der Buchse (28) abgestützt ist.

6. Arbeitsstation nach einem oder mehreren der Ansprüche 1 bis 5, dadurch gekennzeichnet, daß die Vorrichtung (25) zum Messen der Preßkraft als Wägezelle, Kraftaufnehmer o. dgl. ausgebildet ist.

7. Arbeitsstation nach einem oder mehreren der Ansprüche 1 bis 6, dadurch gekennzeichnet, daß der Vorrichtung (25) zum Messen der Preßkraft eine Steuereinrichtung zugeordnet ist, die mit dem Antrieb der Arbeitsstation verbunden ist.

8. Arbeitsstation nach einem oder mehreren der Ansprüche 1 bis 7, dadurch gekennzeichnet, daß die Vorrichtung (25) zum Messen der Preßkraft eine Überlastsicherung zum Schutz der Federanordnung (26) zugeordnet ist.

9. Arbeitsstation nach Anspruch 8, dadurch gekennzeichnet, daß die Überlastsicherung eine ausklinkbare Kupplung (37, 38) aufweist, die von der Vorrichtung (25) zum Messen der Preßkraft gesteuert ist.

## Claims

1. A workstation of a packaging machine, in particular a thermoforming station, with a tool having an upper part (2) and a lower part (3) and with a spring arrangement (26) fettered in series and supported on a housing, whereby the prestress and the deflection path of the spring arrangement can be adjusted and whereby at least one of said parts (2 or 3) is driven with a stroke-type movement, upon which a compressive force exceeding the adjusted prestressing force can be exerted via said compressed spring arrangement (26) onto the workpiece (4) in the working position, **characterized in that** a device (25) for measuring the prestressing force of the spring arrangement (26) and the compressive force exceeding the adjusted prestressing force on the workpiece (4) in the working position in series is provided, supported on the housing and so located in the area of the upper and/or lower part (2, 3) of the tool that it is loaded by the prestressing force in the open position and by the compressive force in the working position.

2. The workstation of claim 1, **wherein** the device (25) for measuring the prestressing force is supported via its one bearing on the spring arrangement (26).

3. The workstation of claim 2, **wherein** the device (25) for measuring the prestressing force and the spring arrangement (26) are located in a row in the drive or on the support side to the lower part (3) or upper part (2) of the tool.

4. The workstation of claim 2 and 3, **wherein** the spring arrangement (26) is composed of a series of disc springs (27) which are supported on one side by the device (25) for measuring the compressive force and on the other side by a bush (28), whereby the bush (28) for adjusting the spring deflection path is seated on a thread (29) on the housing side.

5. The workstation of claim 4, **wherein** a rod (22) is connected to the lower part (3) of the tool (2, 3) and said rod passes through the bush (28) and is supported on the bush (28) via a screw facility (23, 24) for adjusting the prestressing force of the disc springs (27).

6. The workstation of one or several of the claims 1 to 5, **wherein** the device (25) for measuring the compressive force is constructed as a weighing cell, force receiver or similar.

7. The workstation of one or several of the claims 1 to 6, **wherein** a control unit which is connected to the drive for the workstation is allocated to the device (25) for measuring the compressive force.

8. The workstation of one or several of the claims 1 to 7, **wherein** an overload safety device for protecting the spring arrangement (26) is allocated to the device (25) for measuring the compressive force.

9. The workstation of claim 8, **wherein** the overload safety device has a coupling (37, 38) which may be released and which is controlled by the device (25) for measuring the compressive force.

## Revendications

1. Poste de travail d'une machine d'emballage, en particulier poste de thermoformage, comportant un outil qui présente une partie supérieure (2) et une partie inférieure (3), et qui présente un agencement à ressorts (26), captif, appuyé sur le boîtier, dont la force de précontrainte et le parcours de déformation élastique sont configurés de manière à être réglables, et dont au moins une partie (2 ou 3) est entraînée à la manière d'un vérin, et en position de traitement exerce sur une pièce d'oeuvre (4) une force de compression plus grande que la force de précontrainte réglée, caractérisé en ce qu'un dispositif (25) de mesure de la force de précontrainte de l'agencement à ressorts (26) et de la force de compression plus grande exercées sur la pièce d'oeuvre (4) est prévu en série dans la position de traitement, s'appuie sur le boîtier et est disposé dans la région de la pièce supérieure et/ou de la pièce inférieure (2, 3) de l'outil de telle sorte que le dispositif (25) est chargé par la force de précontrainte dans la position ouverte de l'outil (4) et par la force de compression dans la position de traitement.

2. Poste de travail selon la revendication 1, caractérisé en ce que le dispositif (25) de mesure de la force de compression s'appuie par un appui sur l'agencement à ressorts (26).

3. Poste de travail selon la revendication 2, caractérisé en ce que le dispositif (25) de mesure de la force de compression et l'agencement à ressorts (26) sont disposés en série dans la chaîne d'entraînement, ou s'appuyent sur la partie inférieure (3) ou la partie supérieure (2) de l'outil.

4. Poste de travail selon les revendications 2 et 3, caractérisé en ce que l'agencement à ressorts (26) est constitué d'une série de ressorts à plateau (27) qui s'appuyent d'un côté sur le dispositif (25) de mesure de la force de compression et de l'autre côté sur une douille (28), la douille (28) étant montée sur le boîtier, en vue du réglage du parcours de déformation du ressort dans un filet (29).

5. Poste de travail selon la revendication 4, caractérisé en ce qu'une tige (22) est reliée à la partie inférieure (3) de l'outil (2, 3), traverse la douille (28) et s'appuie sur la douille (28) par l'intermédiaire d'un dispositif à vissage (23, 24) pour le réglage de la force de précontrainte des ressorts à plateau (27).

6. Poste de travail selon l'une ou plusieurs des revendications 1 à 5, caractérisé en ce que le dispositif (25) de mesure de la force de compression est configuré comme cellule de pesage, enregistreur de forces, ou similaires.

7. Poste de travail selon l'une ou plusieurs des revendications 1 à 6, caractérisé en ce qu'au dispositif (25) de mesure de la force de compression est associé un dispositif de commande qui est relié à l'entraînement du poste de travail.

8. Poste de travail selon l'une ou plusieurs des revendications 1 à 7, caractérisé en ce qu'au dispositif (25) de mesure de la force de compression est associée une protection contre les surcharges, pour protéger l'agencement à ressorts (26).

9. Poste de travail selon la revendication 8, caractérisé en ce que la protection contre les surcharges présente un accouplement débranchable (37, 38) qui est commandé par le dispositif (25) de mesure de la force de compression.
